# EUROPEAN PATENT APPLICATION

(11) **EP 4 817 405 A1**
(43) Date of publication of application: **07.10.2026**
(21) Application number: 24896808.3
(22) Date of filing: 30.10.2024
(51) Int. Cl.: A01G 9/24

(54) **DIVERGENT OPTICAL LENS FOR PASSIVE ILLUMINATION OF CROPS UNDER PHOTOVOLTAIC COVERS**

(30) Priority: 29.11.2023 ES 202330988
(71) Applicant: Folgrid Technologies, S.L., 08191 Rubi (Barcelona) (ES)
(72) Inventor: ALBARRAN LIGERO, Justo, 08191 RUBI Barcelona (ES); SANCHEZ GARCIA, Oriol, 08191 RUBI Barcelona (ES)
(74) Representative: Ungria López, Javier
(86) International application number: PCT/ES2024/070673
(87) International publication number: WO 2025/114622

(57) **Abstract**

The invention relates to a divergent optical lens for passive illumination of crops under photovoltaic covers, to be installed in empty spaces in the form of rows that can be arranged between successive contiguous photovoltaic panels that form the upper enclosure of an area, in order to illuminate a great volume over the plants disposed below the panels. The lens is an optical lens made of materials with a refractive index greater than unity, to be installed to form part of the cover of a structure together with the photovoltaic panels and in the same planes as the panels, in a longitudinal configuration with a constant cross-section determined by the maximum thickness and total width thereof and a geometry on the upper side and lower side thereof, according to concave circumferential arcs, such that the juncture of the centres of the radii of curvature thereof coincides with the axis of symmetry of the cross-section.

## Description

### OBJECT OF THE INVENTION

The present invention, as set forth in the heading of this description, refers to the use of divergent lenses arranged in the gaps between photovoltaic panels through which light enters naturally, in order to enlarge the illuminated area beneath said panels, thereby facilitating the photosynthesis of the plants located thereunder.

The field of application of the present invention falls within devices intended to facilitate the combined use of land both for the production of photovoltaic energy, by means of the installation of solar panels, and for carrying out agricultural and livestock activities.

### BACKGROUND OF THE INVENTION

By way of introduction, "agrivoltaic" energy represents an innovative approach to minimizing such effects associated with the primary sector, as it enables improved crop efficiency and reduces environmental impact, among other benefits.

This model of sustainable agricultural activity, closely related to "smart farming", is based on the installation of photovoltaic panels on land used for agriculture or livestock. In this way, these spaces are given a dual function: agricultural or livestock production and generation of electricity from solar energy, an economical and sustainable source.

In agrivoltaic installations, the panels are installed on structures or cables several meters above the ground in order to allow crop growth and the access of labor and agricultural machinery. This agrivoltaic system optimizes land use by allocating the same land simultaneously to agricultural or livestock production and to electricity generation.

Furthermore, solar panels protect crops located beneath them by reducing evaporation, preserving moisture and reducing the water footprint of agricultural operations by protecting them from high temperatures in hot areas or areas with very high solar irradiation.

Agrivoltaics systems employ structures that provide environmental conditions more suitable for the crops growing beneath them. Inevitably, this structure creates shade for crops, so openings are typically left through which solar light enters, allowing the photosynthesis of plants.

Approximately 30-40% of the total surface above the crop is typically left open as gaps through which sunlight enters. These gaps are usually distributed regularly in order to obtain the most homogeneous illumination parameters possible.

If adequate lighting parameters are not achieved, artificial lighting installed beneath the structure may also be used to assist crops in photosynthesis, using luminaires that emit wavelengths adapted to the plant growth stage.

Considering inventions found in the prior art addressing the described problem, the following documents have been identified by publication number and title:
1. ES2625058T3 - "Lighting interface for horticulture for interconnecting at least one lighting system".
2. ES2848306T3 - "Capture, transmission, spectral modification and supply of sunlight to shaded plant areas", which even though it has a related purpose, it refers to a technical solution that entirely differs.
3. ES2301132T3 - "Covering element for greenhouses or similar structures", which also addresses a better use of solar rays, although using an optical medium of a different nature and with a different purpose by proposing the optimization of the resulting atmosphere below the photovoltaic panels from a thermal point of view.

Continuing with the state of the art, now in relation to solutions based on optical technology, the concept of thin lenses refers to lenses in which the ratio between the lens center thickness and the radii of curvature is close to zero.

The use of a thin lens configured with two concave surfaces causes incident light to diverge after refraction, thereby projecting the transmitted light onto areas that would otherwise remain shaded in the absence of the lens.

More specifically, a study can be made through Snell's law, which establishes a relationship between the angles of incidence and refraction of a light ray based on the refractive indices of the two media through which it passes.

In the case of a thin lens configured with a double concave surface, the exit angle of the lens depends on the geometric parameters of the lens itself and on the refractive index of the optical material. For materials such as glass or polymethyl methacrylates, it is typically around 1.5, compared to the refractive index of air or vacuum, which is considered to be 1. Accordingly, depending on the distance between the lenses and the width of the surface to be illuminated, the exit angles of the light must be calculated in order to determine the constructive characteristics of the lens.

Thus, in conclusion, the "divergent optical lens for passive illumination of crops under photovoltaic covers", for being installed in the row-shaped gaps between successive photovoltaic panels forming the upper roof of a site, consisting of a biconcave lens with opposed curvatures provides the following advantages compared with the prior art:
- Radiation entering naturally through the gaps between photovoltaic panels is redistributed more homogeneously over a predetermined surface or volume after passing through the optical medium.
- Crops located beneath the photovoltaic panels can carry out photosynthesis under illumination conditions closer to those present in the absence of the structure, thereby reducing agricultural productivity losses associated with defective photosynthesis.
- The radiation entering through the openings of the agrivoltaic structure can correspond with illumination or photosynthetic criteria, increasing the effective surface or volume beneath the structure where photosynthesis may occur.

### EXPLANATION OF THE INVENTION

By way of explanation of the invention, the "Divergent optical lens for passive illumination of crops under photovoltaic covers", intended to be installed in the free gaps arranged in rows between successive adjacent photovoltaic panels that form the upper roof of a site, in order to illuminate a greater volume above the plants located beneath them, consists of an optical lens made of materials having a refractive index greater than one, intended to be placed forming part of the roof of a structure, in combination with the aforementioned photovoltaic panels and in its same planes, characterized by its longitudinal configuration and by a constant cross-section determined by its maximum thickness, total width, and by a geometry on its upper side and lower side defined by concave circular arcs, such that the line joining the centers of the radii of curvature coincides with the axis of symmetry of the cross-section itself.

Thus, when light from a distant source pass through an optical medium characterized by its double concave surface, the refracted light emerges with an increased divergence angle with respect to the angle of incidence, causing the light rays to reach volumes beneath the photovoltaic panels that would not be reached if such spaces did not contain the aforementioned refractive medium

### DESCRIPTION OF THE DRAWINGS

In order to complement the description being made and to facilitate a better understanding of the characteristics of the invention, according to a preferred example of its practical embodiment, a set of drawings is attached as an integral part of this description, in which, for illustrative and non-limiting purposes, the following is represented:
Figure 1. Cross-sectional view of the "Divergent optical lens for passive illumination of crops under photovoltaic covers", showing its geometric configuration.
Figure 2. Front view of a portal frame structure with photovoltaic panels arranged in an east-west configuration, between which row-shaped gaps are interposed and covered by panels of the "Divergent optical lens for passive illumination of crops under photovoltaic covers".
Figure 3. Front view of photovoltaic panels arranged in an east-west configuration with the "Divergent optical lens for passive illumination of crops under photovoltaic covers" on June 21 at 12:00.
Figure 4. Front view of photovoltaic panels arranged in an east-west configuration on June 21 at 12:00 without any optical medium.
Figure 5. Front view of photovoltaic panels arranged in an east-west configuration with the "Divergent optical lens for passive illumination of crops under photovoltaic covers" on March 21 or September 21 at 12:00.
Figure 6. Front view of photovoltaic panels arranged in an east-west configuration on March 21 or September 21 at 12:00 without any additional optical medium.
Figure 7. Front view of photovoltaic panels arranged in an east-west configuration with the "Divergent optical lens for passive illumination of crops under photovoltaic covers" on December 21 at 12:00.
Figure 8. Front view of photovoltaic panels arranged in an east-west configuration on December 21 at 12:00 without any additional optical medium.

In the aforementioned figures, the following constituent elements can be distinguished:
1. Radius of curvature of the upper concave surface R1.
2. Radius of curvature of the lower concave surface R2.
3. Lens thickness e.
4. Lens width s.

### PREFERRED EMBODIMENT OF THE INVENTION

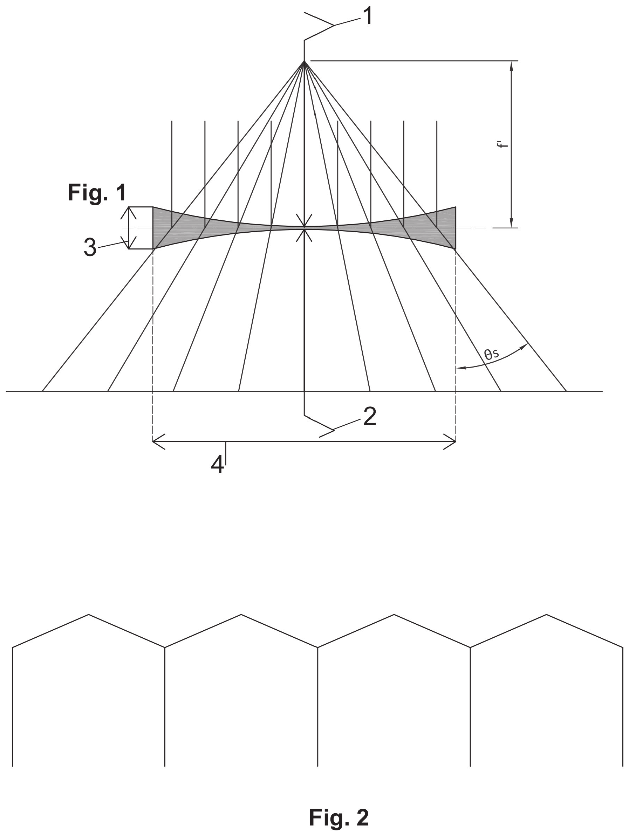

By way of an example of a preferred embodiment, the "Divergent optical lens for passive illumination of crops under photovoltaic covers", as shown in Figures 1-8, may be used on an agricultural plot over which a structure is arranged that supports photovoltaic panels arranged in a dual-slope configuration between successive pillars with alternating east-west orientations.

In the aforementioned Figure 1, the minimum exit angle θₛ can be observed, required to completely illuminate a surface located at a certain distance from the lenses that are object of the invention when the sun is positioned orthogonally thereto.

Since these are thin lenses having symmetrical concave surfaces, it is possible to determine a point in space where the image focus of an object located at infinity would be projected, said object being the light in the present case. $\frac{1}{f ′} = \left(\frac{n ′}{n}-1\right) \left(\frac{1}{{R}_{1}}-\frac{1}{{R}_{2}}\right)$ wherein n' is the refractive index of the lens material and n is the refractive index of air. With R₂ = - R₁ = R for constructive simplicity.

Using this focal distance and the semi-width of the lens, the exit angle can be calculated as follows: ${θ}_{s} = arc tan \left(\frac{s}{2 f ′}\right)$

By substituting into the focal length formula, it follows that: ${θ}_{s} = arc tan \left[\left(\frac{n ′}{n}-1\right)\left(\frac{s}{R}\right)\right]$

The thickness (3) of the lens is therefore: $e = 2 \left[{R}_{1}+\frac{p}{2}-\sqrt{{R}_{1}^{2} - \frac{{s}^{2}}{4}}\right]$ wherein p is a constructive detail, corresponding to the minimum distance between the two concave curves at the central region of the lens.

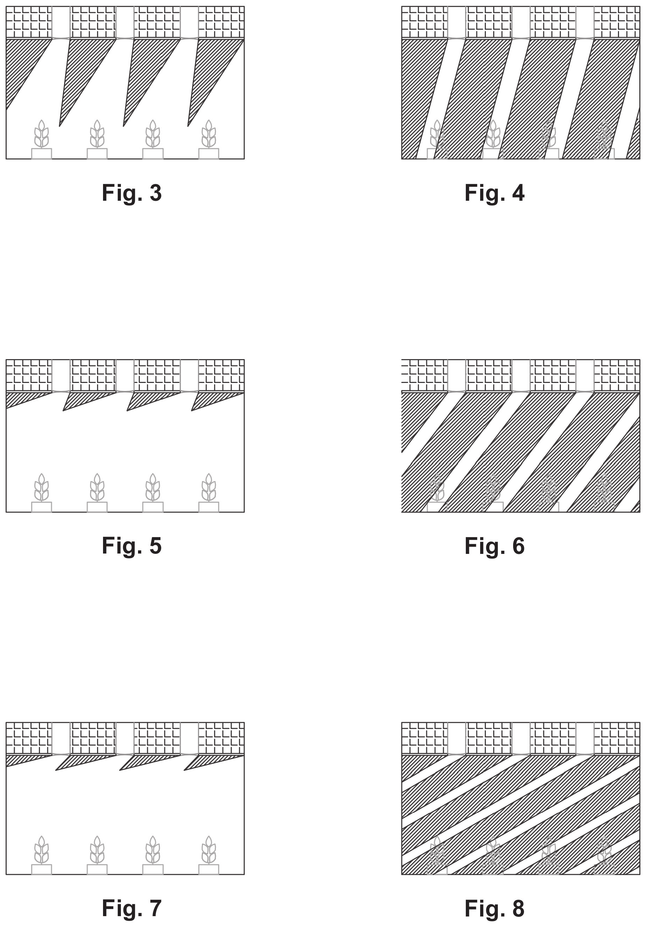

Continuing with the description, Figures 3-8 show the agrivoltaic structure arranged with alternating east-west slopes according to the portal frame of Figure 2, both with and without divergent lenses in the corresponding gaps for the respective days of the solstices and equinoxes at solar noon.

More specifically, in the embodiment a lens having a thickness (3) of 60 mm, a radius of curvature of 900 mm for both the upper concave surface (1) and the lower concave surface (2), and a total width (4) of 457 mm has been used for the rectangular row-shaped gaps that represent 30% of the total agrivoltaic surface, resulting in an exit angle of approximately 14°.

Thus, in order to facilitate understanding of the invention, Figures 3-8 illustrate the conditions that would occur beneath the same upper roof of photovoltaic panels for a given site both without anything and with the "Divergent optical lens for passive illumination of crops under photovoltaic covers" occupying each row of available gaps at 12 a.m. solar time on the key dates corresponding to the solstices and equinoxes as indicated.

In the aforementioned Figures 3-8, which incorporate the lens object of the present invention, it is important to note that when the sun has a higher inclination relative to the roof, areas located closer to the lens can be fully illuminated for a defined lens configuration.

For further clarification, if a line is drawn joining the points where the shadow boundaries intersect, the distance from the roof from which full illumination is obtained can be determined. Evidently, as the sun inclines relative to the roof, this line rises approaching said roof.

Finally, by way of conclusion, the use of the "Divergent optical lens for passive illumination of crops under photovoltaic covers" in the row-shaped gaps formed between successive rows of photovoltaic panels significantly reduces the shading effect problem generated by said photovoltaic panels at a certain distance beneath them, thereby providing greater illumination for crops in a sustainable manner and without the need for artificial luminaires.

As an alternative embodiment, depending on the configuration of the site and its orientation, applications may also be implemented on roofs oriented directly in a single direction with a single slope, according to a certain inclination depending on the latitude at which the roof is located.

## Claims

1. Divergent optical lens for passive illumination of crops under photovoltaic covers, configured to be installed in the free gaps arranged in rows between successive adjacent photovoltaic panels that form the roof of an enclosure and lying in the same planes as said panels, the lens consisting of an optical lens made of materials having a refractive index greater than one,
**characterized in that** the lens has a longitudinal configuration and a constant cross-section defined by a maximum thickness, a total width and a geometry of its upper side and lower side defined by concave circular arcs having respective radii of curvature, such that the line joining the centers of said radii coincides with the axis of symmetry of the cross-section.
